(19)

Europäisches
Patentamt
European
Patent Office
Office européen
des brevets

(11) **EP 3 554 828 B1**

(12) **EUROPEAN PATENT SPECIFICATION**

(45) Date of publication and mention
of the grant of the patent:
**09.09.2020  Bulletin 2020/37**

(51) Int Cl.:
**B32B 27/08** (2006.01)     **B32B 27/32** (2006.01)
**B29C 55/12** (2006.01)     **C08J 5/18** (2006.01)
**B29C 55/14** (2006.01)

(21) Application number: **17818526.0**

(22) Date of filing: **14.12.2017**

(86) International application number:
**PCT/EP2017/082897**

(87) International publication number:
**WO 2018/109112 (21.06.2018 Gazette 2018/25)**

(54) **BIAXIALLY ORIENTED ARTICLES COMPRISING MULTIMODAL POLYETHYLENE POLYMER**

BIAXIAL AUSGERICHTETE ARTIKEL MIT MULTIMODALEM POLYETHYLENPOLYMER

ARTICLES À ORIENTATION BIAXIALE COMPRENANT UN POLYMÈRE DE POLYÉTHYLÈNE
MULTIMODAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2016  EP 16204509**

(43) Date of publication of application:
**23.10.2019  Bulletin 2019/43**

(73) Proprietor: **Borealis AG**
**1220 Vienna (AT)**

(72) Inventors:
• **NIEDERSUESS, Peter**
**4312 Ried/Riedmark (AT)**

• **ORTNER, Stefan**
**4331 Naarn im Machlande (AT)**
• **CAVACAS, Paulo**
**3140-166 Coutada (PT)**

(74) Representative: **Dehns**
**St. Bride's House**
**10 Salisbury Square**
**London EC4Y 8JD (GB)**

(56) References cited:
**EP-A1- 0 692 515     EP-A1- 2 415 598
EP-A1- 2 944 466**

**Description**

The present invention is concerned with biaxially oriented articles comprising a multimodal polyethylene terpolymer. Such articles may be mono- or multilayer films or laminates formed between a biaxially oriented film of the invention and a substrate. The present invention is further related to the production and the use of these biaxially oriented articles, such as their use in packaging.

**Background Information**

Polyethylene is widely used in packaging applications. It is well known to modify the properties of polyethylene films by wisely choosing the polymer type, the processing mode and/or applying post-extrusion modification steps. It is well known, therefore, that mechanical properties of films can be modified and even improved by stretching them. This stretching is often carried out in machine direction. Such films are known as mono directional oriented or machine-direction oriented (MDO) films.

MDO films are known to have both improved stiffness and impact behaviour. However, the monoaxial stretching - due to the distinct orientation of the polymer chains in the direction of the stretching - may deteriorate the mechanical properties in transverse direction, resulting in films with non-isotropic behaviour when comparing machine direction (MD) with transversal direction (TD) properties. It is further known, that the output on machine direction orientation line is lower than the output from a biaxial orientation process, especially when the biaxial orientation operation takes place in tenter frame mode.

Biaxial orientation of polyolefin films is a well-known and well established technology. Biaxially orientation is commonly understood as reheating an existing primary film in a second step with contemporaneous or sequential orientation in both transverse (TD) and machine direction (MD). Biaxial orientation can be carried out in different ways, namely via double-bubble or flat film (cast film) processes.

The double bubble process is carried out in two stages. First, a primary blown film is produced in the form of a tube and rapidly cooled. Then the tube passes through an infra-red oven for reheating and stretching prior to re-blowing of the second bubble. The second blowing is done at lower temperature which results in films with higher shrink forces as well as higher tensile strength. Therefore, films produced in a double bubble process are mainly used for shrink film applications, where a high shrinkage of the final film is desired.

For sealing films however, high shrinkage is not desired as it leads to uneven welding lines and wrinkled and uneven seals. The double bubble process therefore has limited utility in the formation of films that are designed for sealing.

Moreover, the double-bubble process is a quite unstable process, as the stability of the second bubble is critical to the success of the process. To run the process smoothly, it is essential that the softening point of the polymer is ideal. If the bubble is too soft it will collapse. If the bubble is too stiff, there is a major risk of breakage during orientation. In both cases, it takes enormous efforts to restart the process. Nevertheless, the double-bubble technology is often used with polyethylene films, especially with linear low density (LLDPE) and medium density (MDPE) films.

There is a second technique for biaxial orientation of films based on a flat film process. In the flat film process, an extruded (cast) polymer film is biaxially drawn in a tenter frame after solidification at temperatures below the melting point. The drawing of the flat films in two perpendicular directions can be done in one single step (simultaneous drawing) or in two successive steps (sequential drawing). From a commercial point of view, the sequential drawing of flat films is the most important. Compared to the simultaneous process, the sequential drawing offers higher production rates.

The main processing steps in the biaxial flat film orientation are:
providing a cast film, orienting this cast film first in machine direction at ca 105 °C, clamp the monoaxially oriented film in a tenter frame and stretch it transversal to the first orientation direction at elevated temperatures.

The main advantages of the flat film orientation process over the double-bubble technology result from the product quality (better transparency and more constant thickness tolerances of the film) and from flexibility in the manufacturing process. Furthermore, the number of facilities for producing biaxially oriented films via flat film production and tenter frame orientation is much larger than the number of film lines running in double-bubble mode. Biaxially oriented polypropylene (BOPP) is commonly produced using the flat film process and hence there are many facilities that have the capability to make BOPP films (and hence biaxially oriented polyethylene films BOPE).

It is further known, that the output of biaxially orientation line is higher than the output from machine direction orientation line, especially when the biaxial process is operated in tenter frame mode.

As previously noted, biaxially oriented films comprising LLDPE or MDPE are mostly (up to nearly exclusively) produced via the double-bubble technology. Biaxially oriented films of polypropylene or high density polyethylene are nearly exclusively produced via the flat film technology using tenter frame orientation. The fact that polypropylene and HDPE films are prepared via flat film/tenter frame technology lies in the demanding requirements during the tenter frame orientation, especially during the second orientation step in transverse direction. The polymers require stiffness at elevated temperature otherwise the film will break. A downside of the ability to withstand the elevated temperature stretching procedure is however, that biaxially oriented films made from HDPE result in very stiff and at the same time brittle, opaque, hazy and/or matt films. Biaxially oriented films made from polypropylene are also known to be very brittle when exposed to low temperature.

Seen from another point of view, the main problems of converting LLDPE or MDPE grades with density up 940 kg/m$^3$ in flat film with tenter frame technology into biaxially oriented films are twofold. As mentioned above, the primary (flat) film for biaxially orientation is usually produced via cast film technology. However, LLDPE and MDPE are difficult to convert via cast film and tenter frame technology because the two conversion steps (casting the film and subsequent biaxial orientation) pose totally opposite requirements on the material.

On one hand, both polypropylene and polyethylene grades intended for cast-film production usually have a higher MFR than materials used for blown film processes. It is clear, however, to the person skilled, that a material with a higher MFR, will have lower melt strength than a material with a lower MFR.

On the other hand, good melt strength is important during the second step of producing a biaxially oriented film, i.e. during the tenter frame orientation. If the melt strength of the material is not sufficient, the primary film will not withstand the perpendicular drawing forces and will inevitably tear. So a material suitable for producing biaxially oriented films needs to have both an acceptably high MFR (or a specific viscosity behaviour), which allows satisfying conversion on the cast line as well as a high melt strength during the biaxial orientation process. The polymer industry is continuously faced with the need to optimize existing conversion methods, to improve existing processes, to achieve better polymer properties or to simplify current production methods. The polymer film industry is confronted with the desire to take advantage of the existing machinery (such as flat film lines combined with tenter frame orientation) to produce oriented films which exhibit good mechanical and optical performance in a simplified manner and/or with higher output.

At the same time, there is a need to produce films, which show better stiffness, good impact and optical properties. It is further desired that the films show these improved mechanical properties regardless of the orientation of the films. That means films should provide good mechanical properties in both machine (MD) and transverse direction (TD). Isotropic behaviour of stiffness and low shrinkage is also required.

The need to provide such biaxially oriented films with well-balanced mechanical and optical properties as well as low and isotropic shrinkage behaviour is also triggered by the desire to provide monomaterial packaging solutions which meet the increasing demand on easy recyclability.

Currently, film structures for packaging applications, such as stand up pouches, are often complex in view of the layer structures they require to provide functions needed for packaging. Some layers have to be stiff to provide stability to the packaging. Other layers are used for sealing and therefore need good sealing behaviour in the sense of low melting points.

Further layers have to contribute to good optical properties, such as good gloss or low transparency or good printability. Other layers are needed to provide barrier properties.

Many such film structures, e.g. as used in lamination films, are made by laminating polyethylene films with another material to provide stiffness or barrier properties and the like. Often this other material is polyethylene terephthalate (PET), polypropylene and/or aluminium foil and/or polyamides (Nylon).

Nowadays there is a trend to provide "100% PE" solutions, e.g. laminates consisting of a polyethylene film only. This can be achieved by laminating a polyethylene film to a further polyethylene film structure. Since such laminates based on one single class of resin, they can be more easily recycled. Recycling is also essential to improve sustainability and to safe guard resources and is therefore a topic of socioeconomic interest and has accordingly high priority.

So in view of the desire to provide "100% PE" laminate solutions, there is an increasing need to provide polyethylene materials and films, which have enhanced stiffness, good impact behaviour, good optical properties and isotropic mechanical properties without the use of polypropylene, polyethylene terephthalate, aluminium or polyamide. Further, it is necessary to provide such polyethylene materials that can be converted on existing film lines applying commonly known conversion technologies, such as biaxial orientation via tenter frame technology, with good or improved output.

### Description of the prior art:

The use of polyethylene in the preparation of biaxially oriented film is not new. Laminates based on polyethylene are also known in the prior art.

WO97/22470A1 describes biaxially oriented films made from ethylene-based polymers with densities around 917 kg/m$^3$. The polymers were produced using a metallocene catalyst system. However, the application does not advocate the use of terpolymers.

US6306969 relates to biaxially oriented polyolefin shrink films, comprising ethylene -octene copolymers and blends of medium density and linear low density polyethylene grades.

The films have a thickness around 50 μm are very soft with a secant modulus in the range of 200 MPa or below.

WO2013/0239223 discloses a process for forming a biaxially oriented film comprising linear low density polyethylene resin characterised by having 9 - 35 wt.-% of the resin eluting in CET at a temperature greater 97 °C. Films are made from copolymers of ethylene and one comonomer selected from either butene, hexene or octene with densities up to 930 kg/m$^3$.

WO2016135213 describes laminated film structures comprising a first film being laminated to a second film and whereby the laminated film structures are based on polyethylene only, i.e. polymers other than polyethylene are substantially absent and wherein the first film is an MDO film, which can be down-gauged to a film thickness below 30 $\mu$m, preferably to 25$\mu$m and below, e.g. to a film thickness of 20$\mu$m.

EP 2 585 291 A describes laminated film structures being suitable for use in stand up pouches. According to the examples the films have thickness of 60 $\mu$m or 120 $\mu$m, and are both unoriented.

EP 0692515 describes an extruded film comprising a blend of copolymers produced in situ by contacting ethylene and at least one alpha-olefin comonomer with a magnesium/titanium based catalyst system in each of two reactors connected in series.

EP 2415598 discloses a multilayer film which comprises a core layer (C) and two outer layers (0-1, O-2) sandwiching the core layer, wherein (i) the core layer (C) comprises a bimodal ethylene/1-butene/$C_6$ -$C_{12}$ -alpha-olefin terpolymer, (ii) one outer layer (O-1) comprising (ii-1) a low density polyethylene or (ii-2) the bimodal terpolymer as defined for the core layer (C) or (ii-3) a metallocene produced linear low density polyethylene and optionally a low density polyethylene, (iii) the other outer layer (O-2) comprising (iii-1) a metallocene produced linear low density polyethylene and optionally a low density polyethylene.

EP 2944466 describes a process for sealing a machine direction oriented polyethylene film to a substrate, comprising bringing said machine direction oriented polyethylene film and said substrate into contact and subjecting at least a part of the contact area to ultrasound so as to form a seal between said film and said substrate; wherein said machine direction oriented polyethylene film comprises a multimodal linear low density polyethylene terpolymer comprising ethylene and at least two C3-20 alpha olefin comonomers and having a density of 905 to 940 kg/m$^3$.

## Object of the invention

The present inventors sought a polymer with an acceptably high MFR (or a specific viscosity behaviour) so that it can be converted a cast line and a polymer with sufficient high melt strength during the biaxial orientation process, so it can be used then for producing biaxially oriented films in a simplified way on existing machinery.

Seen from another point of view, the present inventors sought a film which has improved mechanical properties in the sense of enhanced stiffness, good impact behaviour, good optical properties, isotropic mechanical properties as well as low and isotropic shrinkage.

Seen from a further point of view, the present inventors sought a film, which can be used alone or in laminated film structures for "100 % PE" packaging solutions and provides good mechanical properties such as enhanced stiffness, good impact behaviour, good optical properties, isotropic mechanical properties as well as low and isotropic shrinkage.

Current inventors have now surprisingly identified that a biaxially oriented article, such as a film, comprising 1.0 - 100 wt% of a multimodal terpolymer of ethylene and at least two alpha olefin comonomers wherein the multimodal terpolymer has a density in the range of 930 - 940 kg/m$^3$ and an MFR21 of 5.0-200 g/10 min determined according to ISO 1133, and wherein said biaxially oriented article has a relative isotropy in view of tensile strength of at least 30.0% meets the above objects. In an especially preferred embodiment the invention provides laminated film structures comprising the biaxially oriented film of the present invention laminated to a substrate, especially a polyethylene substrate.

In particular, it is envisaged that the use of a multimodal terpolymer comprising at least two comonomers enhances the impact properties and tensile strength compared to a copolymer in which only a single comonomer is present. The density of the polymer is in the medium density range. It is envisaged that in this density range polymers are able to be cast as films but are also able to withstand biaxial stretching without failure.

Viewed from another aspect the article is a biaxially oriented monolayer film..

Viewed from another aspect the invention provides a biaxially oriented multilayer film comprising at least two layers wherein at least one layer, such as the core layer, comprises 1.0 - 100 wt% of a multimodal terpolymer of ethylene and at least two alpha olefin comonomers wherein the multimodal terpolymer has an MFR21 of 5.0 to 200 g/10min and a density in the range of 930 - 940 kg/m$^3$, and wherein said biaxially oriented film has a relative isotropy in view of tensile strength of at least 30.0%..

The biaxially oriented articles or laminated film structures of the present invention are, in a further preferred embodiment, used as packaging articles.

In another special embodiment the invention covers the use of multimodal terpolymers of ethylene and at least two alpha olefin comonomers wherein the multimodal terpolymer has a density in the range of 930 - 940 kg/m$^3$ and an MFR21 of 5.0 to 200 g/10min determined according to ISO 1133 in the production of biaxially oriented monolayer or multilayer films, especially in monomaterial packaging solutions, wherein said biaxially oriented film has a relative isotropy in view of tensile strength of at least 30.0%.

In another special embodiment the invention covers the use of biaxially oriented articles in monomaterial packaging solutions.

In a further special embodiment the invention covers a method for producing a bi-axially oriented film comprising a multimodal terpolymer of ethylene and at least two alpha olefin comonomers according to claim 1 comprising the steps of:

a. melting and homogenizing the multimodal terpolymer of ethylene and at least two alpha olefin comonomers having a density in the range of 930 - 940 kg/m$^3$ in an extruder;
b. forming the melt into a cast film;
c. cooling said cast film;
d. reheating and said cast film, preferably at temperatures between 80 - 120 °C;
e. stretching said cast film in machine direction in a ratio between 1:3 to 1:10 to form an MDO-stretched film;
f. annealing said MDO-stretched film, preferably at temperatures between 50 - 90 °C;
g. reheating said MDO stretched film, preferably at temperatures between 100 -150 °C; and
h. stretching said MDO stretched film in transversal direction in a ratio between 1:5 - 1:10.

The above mentioned biaxially oriented articles, such as films, are characterised by enhanced stiffness, good impact behaviour, good optical properties, isotropic mechanical properties as well as low and isotropic shrinkage. Further, such films can be used in "100 % PE" packaging solutions, such as in lamination films, especially in the packaging industry, e.g. in food packaging.

## Detailed description of the polymer

The polyethylene terpolymer of the present invention is multimodal, such as bimodal, i.e. its molecular weight profile does not comprise a single peak but instead comprises the combination of two or more peaks (which may or may not be distinguishable) centred about different average molecular weights as a result of the fact that the polymer comprises two separately produced components.

Alternatively, the multimodal terpolymer of the present invention can be multimodal in view of its comonomer content or in view of the nature of the comonomers. It is preferred if the multimodal terpolymer is multimodal with respect to molecular weight distribution.

It is especially envisaged that the multimodal polyethylene terpolymer can be multimodal, such as bimodal in various aspects, such as in view of molecular weight and comonomer distribution.

Multimodal polyethylene terpolymers are typically made in more than one reactor, each having different conditions. The components of the multimodal terpolymer are typically so different that they show more than one peak or shoulder in the diagram given as result of its GPC (gel permeation chromatograph) curve, where d(log(MW)) is plotted as ordinate vs log(MW), where MW is molecular weight.

The multimodal polyethylene terpolymer may comprise at least two C4-12 alpha-olefin comonomers. Ideally, multimodal polyethylene terpolymer contains 2 comonomers only. The comonomers are especially selected from 1-butene, 1-hexene or 1-octene. The amount of comonomers present in the multimodal terpolymer is preferably 0.5 to 12 mol%, e.g. 2 to 10% mole, especially 4 to 8% mole.

The multimodal polyethylene terpolymer suitable for use in the biaxially oriented films of the present invention can comprise a lower molecular weight fraction being a polyethylene homopolymer and a higher molecular weight fraction being a terpolymer of ethylene and at least two alpha olefin comonomers having 4 - 10 carbon atoms.

The multimodal polyethylene terpolymer suitable for use in the biaxially oriented films of the present invention can preferably comprise

(A-1) a lower molecular weight homopolymer of ethylene; and
(A-2) a higher molecular weight terpolymer of ethylene, 1-butene and a C6-C12-alpha-olefin or
(B-1) a lower molecular weight copolymer of ethylene and 1-butene; and
(B-2) a higher molecular weight copolymer of ethylene and a C6-C12-alpha-olefin such as 1-hexene;
or
(C-1) a lower molecular weight copolymer of ethylene and a C6-C12-alpha olefin; and
(C-2) a higher molecular weight copolymer of a terpolymer of ethylene, 1-butene and a C6-C12-alpha olefin.

Preferably the comonomer of the higher molecular weight component is a C6-C12-alpha-olefin selected from the group of 1-hexene, 4-methyl-1-pentene, 1-octene and 1-decene, especially 1-hexene or 1-octene.

More preferably the multimodal polyethylene terpolymer comprises lower and higher molecular weight components as defined in (A-1) and (A-2).

The multimodal polyethylene composition may be produced by polymerisation using conditions which create a multimodal (e.g. bimodal) polymer product ideally using a Ziegler Natta catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) composition is produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662). Terpolymers meeting the requirements of the invention are known and can be bought from suppliers such as Borealis and Borouge, e.g. FX1002.

The multimodal terpolymer has a density in the range of 930-940 $kg/m^3$. Ideally, the multimodal terpolymer has a density of 930 - 936 $kg/m^3$. Alternatively the density may be from 933 - 938 $kg/m^3$.

The melt flow rate 190/5 according to ISO1133 (i.e. MFR5) of the multimodal terpolymer is preferably in the range 0.05 to 20 g/10min, e.g. 0.1 to 10 g/10min, preferably 0.2 to 6.0 g/10min. The MFR5 is highly preferably in the range of 0.10 to 5.0 g/10min.

The MFR21 of the multimodal terpolymer is in the range 5.0 to 200 g/10min, preferably 10.0 to 200 g/10min, such as 10.0 to 100 g/10min, preferably 15.0 to 50.0 g/10min, such as from 15 to 45 g/10 min. A preferred range is 5.0 to 100 g/10min.

The ratio of MFR21 to MFR5 is an indication on molecular weight distribution and to a certain extent also to processability. The ratio of MFR21 to MFR5 is understood as FRR 21/5.
The FRR21/5 is preferably at least 10.0 or higher, e.g. 15.0 or higher, such as 18.0 or 21.0 or higher. The FRR21/5 is usually 50.0 or below, such as 35.0 or lower, like 32.0 or 28.0.It is thus preferred that the FRR21/5 of the multimodal terpolymer is in the range of 10.0 to 50.0, such as 15.0 to 35.0, or 18.0 to 32.0.

It is preferred, if the multimodal polyethylene terpolymer of the present invention has a MFR21 in the range of 10.0 - 50.0 g/10 min and a FRR21/5 of at least 10.

The Mw of the multimodal terpolymer may be in the range 100,000 to 300,000, preferably 150,000 to 270,000. The Mw/Mn of the multimodal terpolymer may be in the range 10 to 30, preferably 10 to 25.

The lower molecular weight fraction of the multimodal polyethylene terpolymer may have a MFR2 of at least 50.0, preferably 50.0 to 3000 g/10 min, more preferably at least 100 g/10 min. The molecular weight of the lower molecular weight component should preferably range from 20.000 to 50.000, e.g. 25.000 to 40.000.

The density of the lower molecular weight component may range from 930 to 980 $kg/m^3$, e.g. 940 to 970 $kg/m^3$, more preferably 945 to 955 $kg/m^3$ in the case of copolymer and 940 to 975 $kg/m^3$, especially 960 to 972 $kg/m^3$ in the case of homopolymer.

The lower molecular weight component preferably forms from 30 to 70 wt%, e.g. 40 to 60% by weight of the multimodal terpolymer with the higher molecular weight component forming 70 to 30 wt%, e.g. 40 to 60% by weight.

The higher molecular weight component of the multimodal polyethylene terpolymer has a lower MFR2 and a lower density than the lower molecular weight component.

The higher molecular weight component preferably has an MFR2 of less than 1.0 g/10 min, preferably less than 0.5 g/10 min, especially less than 0.2 g/10min. The higher molecular weight component ideally has a density of less than 915 $kg/m^3$, e.g. less than 910 $kg/m^3$, preferably less than 905 $kg/m^3$. The Mw of the higher molecular weight component may range from 100,000 to 1,000,000, preferably 250,000 to 500,000.

**Detailed description of the Films**

It is preferred if the biaxially oriented article of the invention is a biaxially oriented film.
The biaxially oriented films of the present invention can have a thickness in the range of 5.0 - 100 $\mu$m, such as 10.0 - 75.0 $\mu$m, like 15.0 - 50 $\mu$m or 20.0 - 40.0 $\mu$m.

The biaxially oriented films of the present invention show a very isotropic behaviour of the mechanical properties in machine and transverse (or perpendicular) direction. The biaxially oriented films of the present invention show especially a very isotropic behaviour in view of tensile strength in machine and transverse direction. Accordingly the biaxially oriented films of the present invention show a high relative isotropy in view of tensile strength.

Relative Isotropy in view of tensile strength can be determined by putting into relation the values for tensile strength determined both in machine (MD) and transversal direction (TD) of the films. Accordingly, it is proposed in the current application to compare the smaller value against the higher one (regardless which one is TD or MD), so relative isotropy can ideally go up to 100 %.

The relative isotropy in view of tensile strength is accordingly determined by the ratio of

*tensile strength (smaller of TD and MD) / Tensile strength (higher of TD and MD) \*100 [%].*

The relative isotropy in view of tensile strength of the biaxially oriented films of the present invention is at least 30.0 %, preferably at least 45.0 % , such as at least 50.0 %, like 55.0 % or 60.0 % or higher.

In a particularly preferred embodiment, the invention provides a biaxially oriented article, such as a film, comprising 1.0 to 100.0 wt.-% of a multimodal terpolymer of ethylene and at least two alpha olefin comonomers wherein the multimodal terpolymer has a density in the range of 930 - 940 kg/m$^3$, an MFR21 of 5.0 - 200 g/10 min, e.g. 5.0 to 100 g/10min, determined according to ISO 1133 and wherein said biaxially oriented article has a relative isotropy in view of tensile strength of at least 30.0 %.

The biaxially oriented films of the present invention also show advantages over monoaxially oriented PE-films especially in view of shrinkage behaviour: The biaxially oriented films of the present invention have less shrinkage in hot oil, which indicates better thermomechanical stability at elevated temperatures. Such improvement of the thermomechanical stability at elevated temperatures is advantageous for sealing on packaging lines:

Higher thermomechanical stability of the films allows higher sealing temperatures to be used which leads to faster sealing, shorter sealing cycles and hence higher packaging speed due to faster sealing.

The biaxially oriented films of the present invention show good optical properties in view of gloss when measured according to D2457. The biaxially oriented films of the present invention show good optical properties in view of haze transparency when measured according to ASTM 1003D. The haze is 15.0 % or lower such as 13.0 or 11.0% or lower. The clarity of the biaxially oriented films of the present invention can be 90.0 % or higher. Gloss at 60° can be 85.0 or higher, preferably 90.0 or higher such as 95.0 or higher. Gloss at 20° can be 40.0 or higher, preferably 48.0 or higher such as 52.0 or higher.

Preferably the measurements for gloss, clarity and haze are done 20 $\mu$m films.

The biaxially oriented films of the present invention show also very low differences of the shrinkage value in machine (MD) and transversal (TD) direction. So the biaxially oriented films of the present invention show especially a very isotropic behaviour in view of low shrinkage difference in machine and perpendicular direction.

Shrinkage difference can be determined by subtracting the absolute values for shrinkage determined in machine and transversal direction, not taking into account if the film decreases (negative value) or increases in size (positive value).

The difference of shrinkage is determined as follows:

$$\Delta \text{ shrinkage} = |\ (\ |\text{shrinkage}_{MD}| - |\text{shrinkage}_{TD}|\ )\ |$$

The biaxially oriented films of the present invention ideally have shrinkage difference of at most 8.0 % when measured at 80 °C, such as 6.5 % or lower, such as 5.0 % or lower, preferably 4.0 % or lower.

The biaxially oriented films of the present invention ideally have shrinkage difference of at most 10.0 % when measured at 90 °C, such as 8.5 % or lower, such as 7.0 or lower, especially 6.0 % or lower.

The biaxially oriented films of the present invention ideally have shrinkage difference of at most 16.0 % when measured at 100 °C, such as 13.0 % or lower, preferably 10.0 or lower, especially 8.0 % or lower.

The biaxially oriented films of the present invention ideally have shrinkage difference of at most 30.0 % when measured at 110 °C, such as 22.0 % or lower, preferably 18.0 or lower, especially 15.0 % or lower.

Preferably, the biaxially oriented films of the present invention are further characterised by having both a high relative isotropy in view of tensile strength of at least 30 % and a low shrinkage difference determined at 80°C, 90°C, 100 °C or 110 °C as defined above.

The biaxially oriented films of the present invention show excellent behaviour in low temperature impact properties, e.g. in a Dyna test at -20°C. The films of the invention are seen, therefore as being useful in low temperature applications, e.g. frozen food packaging.

Preferably the measurements for shrinkage, Dyna test and relative isotropy are done on 20 $\mu$m films.

The multimodal terpolymer of the present invention can be blended with other polymers in the biaxially oriented articles, such as films, of the invention. It is preferred, that a biaxially oriented article, such as film, of the present invention comprises between 1.0 and 100 wt.-% of the multimodal terpolymer. In a preferred alternative, such an article may comprise at least 30.0, or at least 50.0 wt.-% or at least 70.0 wt.-% of the multimodal terpolymer. It is further preferred that such articles comprise the multimodal terpolymer in ranges of 30.0 - 98.0 wt.-%, such as 50.0 - 95.0 or 70.0 - 85.0 wt%.

In a further preferred alternative, articles of the invention "consist of" the multimodal terpolymer.

If other polymers are present, it is preferred if any other polymer is a polyethylene. Thus, in a preferred embodiment, the biaxially oriented articles of the present invention are characterised by being free of any polymers other than polyethylenes. Suitable polyethylenes that can be mixed include HDPE, MDPE, LLDPE, LDPE and ethylene based plastomers and elastomers.

The biaxially oriented articles, such as films, of the present invention may contain usual polmer additives, such as slip agents, UV-stabilisers, pigments, antioxidants, nucleating agents and so on. These additives may be carried on a carrier polymer in the form of a masterbatch.

For the avoidance of doubt, it is envisaged that usual polymer additives, e.g. as described above may be present even when the article, such as film, (or even a film layer) "consists" of the multimodal terpolymer. The term "consists of" is not intended therefore to exclude the presence of polymer additives. It does however exclude the presence of other polymer components for blending with the terpolymer. If a carrier polymer is used as part of a masterbatch, that is not excluded however. Articles may be free of any other mixing polymers but may still comprise minor amounts of carrier polymer used for masterbatches.

The biaxially oriented films of the present invention can be monolayer films or multilayer films. Multilayer films may comprise 2 or more layers, such as 3, 5, 7 or more layers.

If the biaxially oriented film is a multilayer film, the multimodal terpolymer may be present in a core layer or in any outer layer. In a preferred embodiment, the biaxially oriented film of the present invention is a multilayer film having a core and one or more adjacent layers (e.g. two outer layers), wherein the core layer comprises the multimodal terpolymer and the outer layers comprise low melting polyethylene grades (e.g. LLDPE) which have low density, and are suitable for good sealing behaviour. Suitable outer layers can comprise LLDPE, LDPE or other polyethylene grades, such as elastomers or plastomers preferably having a density of at most 929 kg/m$^3$, such as 860 to 925 kg/m$^3$, such as 875 - 920 kg/m$^3$. The person skilled is well aware what materials can be used as sealing layers.

The terpolymer of the invention may form at least 1.0 wt% of the layer in a multilayer film in which it is present. It is preferred that a layer within the biaxially oriented film comprises between 1.0 and 100 wt.-% of the multimodal terpolymer, such as at least 30.0 wt%, or at least 50.0 wt% or at least 70.0 wt.-% of the multimodal terpolymer. It is further preferred a layer of a multilayer film comprises the multimodal terpolymer in ranges of 30.0 - 98.0 wt.-%, such as 50.0 - 95.0 or 70.0 - 85.0 wt%. The layer may consist of the terpolymer.

In case the biaxially oriented film of the present invention is a multilayer film, the layer distribution should be as such that the layer comprising the multimodal terpolymer forms a major part of the film structure and the sealing layers form a minor part. Possible layer distributions may be outer layer 1.0 - 25.0 %, core layer 50.0 - 98.0 %, outer layer 1.0 - 25.0 %, wherein the percentages are seen in relation to the total thickness of the film. It is preferred, that each of the outer layers forms 3.0 - 20.0%, such as 4.0 - 15.0 % or 5.0 - 10.0% of the total thickness of the film, and the core layer preferably has 60.0 - 94.0 %, preferably 70 - 92 %, such as 80 - 90 % of the total film thickness.

The multilayer films of the present invention can be symmetric (with both outer layers having the same thickness, or asymmetric (with just one outer layer or with two or more outer layers differing in view of their thickness.

The biaxially oriented films of the present invention can be laminated to other substrates to form a laminated structure. Suitable substrates include but are not limited to, biaxially oriented polypropylene film, oriented PET film, oriented polyamide film, blown and cast PE film, aluminum foil and paper. In particular, the substrate to which the biaxial film of the invention is laminated is a polyethylene film. In this way, the entire laminate is formed from polyethylene based polymers.

It is preferred if the laminate is formed from a mono or multilayer biaxial film as defined herein and a substrate layer, such as a polyethylene substrate layer. That substrate layer is most especially a polyethylene blown film such as one comprising HDPE, MDPE, LLDPE, LDPE and ethylene based plastomers and elastomers.

In any such laminate, there is preferably one film layer based on the biaxially oriented film of the invention. Such a biaxially oriented film layer within a laminated structure can have a thickness in the range of 5.0 - 100 μm, such as 10.0 - 75.0 μm, like 15.0 - 50 μm or 20.0 - 40.0 μm. The substrate layer may have a thickness of of 5.0 - 100 μm, such as 10.0 - 75.0 μm, like 15.0 - 50 μm or 20.0 - 40.0 μm.

Present inventors believe that the biaxially oriented films of the present invention are very suitable when used in laminated film structures as the isotropic behaviour of the biaxially oriented films of the present invention is retained after laminating it on other substrates.

Accordingly, a laminated structure based on the biaxially oriented films of the present invention should be advantageous over a laminated structure based on mono axially directed (MDO) films in view of more isotropic behaviour in view of tensile strength or better isotropy of the shrinkage behaviour.

The biaxially oriented films of the present invention and also laminates comprising the biaxially oriented films of the present invention show very good impact behaviour at low temperatures and can be used over a much broader temperature window compared to films or laminates based on e.g. biaxially oriented polypropylene. So the biaxially oriented films of the present invention are seen as especially useful for packaging frozen food.

The biaxially oriented films or laminates of the present invention may be used for the production of packaging articles like bags, pouches, labels or lids, or other technical applications like banknotes.

The biaxially oriented films or laminates of the present invention are preferably used for applications related to food packaging.

In a further embodiment the invention encompasses a method for the production of biaxially oriented films comprising a multimodal terpolymer of ethylene and at least two alpha olefin comonomers according to claim 1, comprising the steps of:

a. melting and homogenizing the multimodal terpolymer of ethylene and at least two alpha olefin comonomers in an extruder,
b. forming the melt into a cast film
c. cooling said cast film,
d. reheating said cast film at temperatures between 80 - 110 °C,
e. stretching said cast film in machine direction in a ratio between 1:3 to 1:10,
f. annealing said MDO-stretched film at temperatures between 50 - 90 °C
g. reheating said MDO stretched film at temperatures between 100 - 150 °C and
h. stretching said MDO stretched film in transversal direction in a ratio between 1:5 - 1:10.

In one embodiment, the process further comprises laminating the resulting biaxially oriented film to a substrate.

The manufacture of biaxially oriented films is well known and the use of a tenter frame process to prepare biaxial films is also known, in particular from BOPP technology. The person skilled in the art can apply his knowledge of BOPP film production to the manufacture of the BOPE films of the invention. The components of the film are initially mixed and melted within an extruder. The temperature within the extruder is conventional and will be sufficient to ensure melting of the components. The extrudate is cast to form a cast film (or flat film) which is then cooled. The film should ideally be cooled to a temperature of less than 50°C before any reheating process is begun.

The film is then reheated and stretching is begun. The temperature during the stretching phase can vary and may decrease as the stretching process continues. The reheat temperature in step d) is defined as the temperature at the start of the stretching process. Once stretching in the machine direction is complete, the film is annealed. This maintains the MDO film structure for the TD stretch. Reheating for the second stretching phase is carried out and again, the temperature can vary during the stretching phase. The reheat temperature in step g) is defined therefore as the temperature at the start of the second stretch procedure. Finally, the film is allowed to cool.

It is preferred if the MD stretch ratio is lower than the TD stretch ratio. A preferred MD stretch ratio is 1:3 to 1:8, such as 1:4 to 1:7. A preferred TD ratio is 1:5 to 1:9, such as 1:5.5 to 1:7.

The present invention will now be described in further detail by the examples provided below:

**Examples:**

**Measuring methods**

**Melt Flow Rate (MFR)**

The melt flow rates are measured at 190 °C with a load of 5.0 kg (MFRs) or 21.6 kg ($MFR_{21}$) according to ISO 1133

**Flow Rate Ratio (FRR21/5))**

FRR is determined as the ratio between the MFR21 and the MFR5.

**Density**

The density was measured according to ISO 1183 and ISO1872-2 for sample preparation.

**Tensile strength and Tensile Modulus**

TD (transversal direction) and MD (machine direction)
Tensile tests (for tensile strength and tensile modulus) in machine and transverse direction were determined according to ISO 527-3 on films with a thickness of 25 $\mu$m (CE1) respectively 20 $\mu$m (biaxially oriented film, IE) at a cross head speed of 1 mm/min.

The relative isotropy in view of tensile strength is accordingly determined by the ratio of

$$\text{tensile strength }_{(\text{smaller of TD and MD})} / \text{Tensile strength }_{(\text{higher of TD and MD})} *100 \text{ [\%]}$$

**Gloss** and **haze**

Gloss and haze as measures for the optical appearance of the films were determined according to ASTM D2457 (gloss; (measured outside, lengthwise, measuring angle 20°, 60° or 85°)) and ASTM D1003 (haze).

**Dyna test:**

The impact strength of films is determined by the "Dynatest" method according to ISO 7725-2 at 0°C on biaxially oriented films with a thickness of 20 $\mu$m.
The value "$W_{break}$" [J/mm] represents the relative total penetration energy per mm thickness that a film can absorb before it breaks divided by the film thickness. The higher this value, the tougher the material is.

**Film Shrinkage in oil:**

Comparative determination of shrinkage in oil was performed according to an internal Borealis method: 50mm x 50mm film samples with a thickness of 20 $\mu$m are placed in oil (polydimethylsiloxan) at given temperature for 10 seconds. After this the samples are removed, and conditioned at room temperature for 1 hour. Finally the shrinkage, i.e. change in dimension is measured. Results are presented in table 1.
Shrinkage values are calculated as:

$$\text{Shrinkage[\%]} = (Lm-Lo) *100/Lo$$

wherein Lo is the original length (i.e. 50 mm), and Lm is the length measured after thermal exposure.
If the measured value increases (e.g. in the TD direction), then shrinkage is positive, if the measured value decreases, then shrinkage is negative..
The shrinkage difference is determined by

$$\Delta \text{ shrinkage} = |\ (\ |\text{shrinkage }_{MD}| - |\text{shrinkage }_{TD}|\ )\ |$$

**Comonomer determination (NMR spectroscopy)**

Quantitative nuclear-magnetic resonance (NMR) spectroscopy was used to quantify the comonomer content of the polymer Quantitative 13C{1H} NMR spectra recorded in the molten-state using a Bruker Advance III 500 NMR spectrometer operating at 500.13 and 125.76 MHz for 1H and 13C respectively. All spectra were recorded using a 13C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{[1], [2], [6]} Standard single-pulse excitation was employed utilising the transient NOE at short recycle delays of 3s {[1], [3]} and the RS-HEPT decoupling scheme {[4], [5]}. A total of 1024 (1k) transients were acquired per spectrum. This setup was chosen due its high sensitivity towards low comonomer contents. Quantitative 13C{1H} NMR spectra were processed, integrated and quantitative properties determined using custom spectral analysis automation programs. All chemical shifts are internally referenced to the bulk methylene signal ($\delta$+) at 30.00 ppm {[9]}.Characteristic signals corresponding to the incorporation of 1-hexene were observed {[9]} and all contents calculated with respect to all other monomers present in the polymer.

$$H = I*B4$$

With no other signals indicative of other comonomer sequences, i.e. consecutive comonomer incorporation, observed the total 1-hexene comonomer content was calculated based solely on the amount of isolated 1-hexene sequences:
Htotal = H
Characteristic signals resulting from saturated end-groups were observed. The content of such saturated end-groups was quantified using the average of the integral of the signals at 22.84 and 32.23 ppm assigned to the 2s and 2s sites respectively:

$$S = (1/2) * (I2S + I3S)$$

The relative content of ethylene was quantified using the integral of the bulk methylene ($\delta$+) signals at 30.00 ppm:

$$E = (1/2) * I\delta+$$

The total ethylene comonomer content was calculated based the bulk methylene signals and accounting for ethylene units present in other observed comonomer sequences or end-groups:

$$Etotal = E + (5/2) * B + (3/2) * S$$

The total mole fraction of 1-hexene in the polymer was then calculated as:

$$fH = ( Htotal / ( Etotal + Htotal ) )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner: H [wt%] = 100 * (fH * 84.16) / ((fH * 84.16) + ((1-fH) * 28.05))

[1] Klimke, K., Parkinson, M., Piel, C., Kaminsky, W., Spiess, H.W., Wilhelm, M., Macromol. Chem. Phys. 2006;207:382.
[2] Parkinson, M., Klimke, K., Spiess, H.W., Wilhelm, M., Macromol. Chem. Phys. 5 2007;208:2128.
[3] Pollard, M., Klimke, K., Graf, R., Spiess, H.W., Wilhelm, M., Sperber, O., Piel, C., Kaminsky, W., Macromolecules 2004; 37:813.
[4] Filip, X., Tripon, C., Filip, C., J. Mag. Resn. 2005, 176, 239
[5] Griffin, J.M., Tripon, C., Samoson, A., Filip, C., and Brown, S.P., Mag. Res. in Chem. 2007 45, S1, S198
[6] Castignolles, P., Graf, R., Parkinson, M., Wilhelm, M., Gaborieau, M., Polymer 50 (2009) 2373
[7] Zhou, Z., Kuemmerle, R., Qiu, X., Redwine, D., Cong, R., Taha, A., Baugh, D. Winniford, B.,J. Mag. Reson. 187 (2007) 225
[8] Busico, V., Carbonniere, P., Cipullo, R., Pellecchia, R., Severn, J., Talarico, G., Macromol. Rapid Commun. 2007, 28, 1128
[9] J. Randall, Macromol. Sci., Rev. Macromol. Chem. Phys. 1989, C29, 201.

**Material description:**

FX1002 is a multimodal alpha olefin terpolymer commercially available by Borealis AG.
FX1002 has a density of 937 kg/m$^3$ (determined according to ISO 1183), a Melt Flow Rate (190 °C/5 kg) of 2.0 g/10min and a Melt Flow Rate (190°C/21 kg) of 42 g/10min (according to ISO 1133).

**Inventive example:**

Film extrusion description:

The primary film was produced on 5 layer coex machine with all extruders fed with the same material (i.e. FX1002). Thickness of the cast film was 550 $\mu$m, width: 250 mm Cast film (primary film) machine settings:

Extruder temperature setting: 265 °C, melt temperature 280 °C, die temperature: 260 °C, chill roll temperature: 25 °C; output: 80 kg/h.

MDO stretching ratio of the primary (cast) film, ratio was 1:4.5

Temperature profile: preheat: 85 - 100 °C, stretch: ca 110 °C - 80 °C; Annealing step at 70 °C.

Transversal Orientation (TDO stretching) was done on a tenter frame line.

Temperature profile: decreasing from 145 °C to 100 °C. Stretch ratio TD: 1:6, line speed: 37 m/min.

Comparative example was a MDO blown film made out of FX1002, with a final thickness of 25 $\mu$m, produced with a stretch ratio of 1:6.

Table 1: Mechanical properties of the inventive example:

| | Unit | Inventive Example Biaxially oriented FX1002 20 $\mu$m | Comparative MDO FX1002 25$\mu$m |
|---|---|---|---|
| Tensile Test **machine direction (MD)** | | | |
| Tensile Modulus | MPa | 895 | 1082 |
| Tensile strength | MPa | 112 | 177 |
| Tensile Test **transversal direction (TD)** | | | |
| Tensile Modulus | MPa | 1218 | 1143 |
| Tensile strength | MPa | 178 | 33 |
| Relative isotropy in view of | % | | |
| Tensile strength | % | 63 | 18.6 |
| HAZE | % | 10 | 18 |
| GLOSS 20° | | 55 | |
| GLOSS 60° | | 98 | |
| GLOSS 85° | | 77 | |
| CLARITY | % | 93.5 | 89 |
| Dynatest 23°C | | | |
| PEAK FORCE | N | 226 | 124 |
| DEFORMATION AT PEAK FORCE | mm | 10.4 | 12 |
| RELATE PEAK FORCE | N/mm | 9044 | 5162 |
| RELATE ENERGY TO PEAK FORCE | J/mm | 36 | 28 |
| RELATE TOTAL PENETRATION ENERGY | J/mm | 40 | 33 |
| Dynatest -20°C | | | |
| PEAK FORCE | N | 236 | - |
| DEFORMATION AT PEAK FORCE | mm | 9.9 | - |
| RELATE PEAK FORCE | N/mm | 9458 | -- |
| RELATE ENERGY TO PEAK FORCE | J/mm | 37.5 | - |
| RELATE TOTAL PENETRATION ENERGY | J/mm | 39 | - |
| film shrinkage Oil 80°C | | | |
| shrinkage MD | % | -0.4 | -9.0 |
| shrinkage TD | % | -3.9 | 0.0 |
| Oil 90°C | | | |
| shrinkage MD | % | -1.1 | -13.0 |
| shrinkage TD | % | -6.5 | 1.9 |
| Oil 100°C | | | |
| shrinkage MD | % | -2.9 | -22.1 |
| shrinkage TD | % | -10.1 | 3.2 |

(continued)

|  | Unit | Inventive Example Biaxially oriented FX1002 20 $\mu$m | Comparative MDO FX1002 25$\mu$m |
|---|---|---|---|
| Oil 110 °C shrinkage MD shrinkage TD | % % | -6.1 -20.2 | -40 4.8 |
| Shrinkage Difference 80°C 90 °C 100 C 110 °C | | 3.5 % 5.4 % 7.2 % 14.1% | 9.0 % 11.1 % 18.9 % 35.2 % |

**Claims**

1. A biaxially oriented article comprising 1.0 to 100.0 wt.-% of a multimodal terpolymer of ethylene and at least two alpha olefin comonomers wherein the multimodal terpolymer has a density in the range of 930 - 940 kg/m$^3$ and an MFR21 of 5.0 - 200 g/10 min determined according to ISO 1133, and wherein said biaxially oriented article has a relative isotropy in view of tensile strength of at least 30.0%.

2. A biaxially oriented article according to claim 1 wherein the biaxially oriented article is a film.

3. A biaxially oriented article as claimed in claim 2 wherein said film is a multilayer film.

4. A biaxially oriented article according to any of the preceding claim, wherein the two alpha olefin comonomers are C4 - 10 alpha olefins.

5. A biaxially oriented article according to any of the preceding claim wherein said multimodal terpolymer has an MFR21 of 5.0 - 100 g/10 min determined according to ISO 1133.

6. A biaxially oriented article according to any of the preceding claims, wherein the multimodal terpolymer comprises a

   a. lower molecular weight fraction being a polyethylene homopolymer and
   b. a higher molecular weight fraction being a terpolymer of ethylene and at least two alpha olefin comonomers having 4 - 10 carbon atoms.

7. A biaxially oriented article according to any of the preceding claims, wherein the multimodal terpolymer has MFR21 in the range of 15.0 - 50.0 g/10 min.

8. A biaxially oriented article according to any of the preceding claims wherein the FRR21/5 of the multimodal terpolymer is in the range of 10.0 to 50.0.

9. A biaxially oriented multilayer film comprising at least two layers wherein at least one layer comprises 1.0 - 100 wt% of a multimodal terpolymer of ethylene and at least two alpha olefin comonomers wherein the multimodal terpolymer has an MFR21 of 5.0 to 200 g/10min and a density in the range of 930 - 940 kg/m$^3$, and wherein said biaxially oriented film has a relative isotropy in view of tensile strength of at least 30.0%.

10. A biaxially oriented film according to claim 9 wherein said multimodal terpolymer has an MFR21 of 5.0 - 100 g/10 min determined according to ISO 1133.

11. Laminated film structure comprising a biaxially oriented film as claimed in claim 2 to 10 laminated to a substrate.

12. A laminated film structure as claimed in claim 11 wherein the structure consists of polyethylene polymers only.

13. Use of a multimodal terpolymer of ethylene and at least two alpha olefin comonomers wherein the multimodal terpolymer has a density in the range of 930 - 940 kg/m$^3$ and an MFR21 of 5.0 to 200 g/10min determined according to ISO 1133 in the production of biaxially oriented monolayer or multilayer films, especially in monomaterial packaging solutions, wherein said biaxially oriented film has a relative isotropy in view of tensile strength of at least 30.0%.

14. Method for producing a bi-axially oriented film comprising a multimodal terpolymer of ethylene and at least two alpha olefin comonomers according to claim 1, comprising the steps of

   a. melting and homogenizing the multimodal terpolymer of ethylene and at least two alpha olefin comonomers in an extruder;
   b. forming the melt into a cast film;
   c. cooling said cast film;
   d. reheating said cast film, preferably at temperatures between 80 - 110 °C;
   e. stretching said cast film in machine direction in a ratio between 1:3 to 1:10;
   f. annealing said MDO-stretched film, preferably at temperatures between 50 - 90 °C;
   g. reheating said MDO stretched film, preferably at temperatures between 100 -150 °C; and
   h. stretching said MDO stretched film in transversal direction in a ratio between 1:5-1:10.

15. A method as claimed in claim 14 wherein the stretching steps employ tenter frame technology.

**Patentansprüche**

1. Biaxial ausgerichteter Artikel, umfassend 1,0 bis 100,0 Gew.-% eines multimodalen Ethylenterpolymers und mindestens zwei Alphaolefin-Comonomere, wobei das multimodale Terpolymer eine Dichte im Bereich von 930-940 kg/m$^3$ und einen Fließindex MFR21 von 5,0 - 200 g/10 Min., gemäß ISO 1133 bestimmt, aufweist, und wobei der biaxial ausgerichtete Artikel eine relative Isotropie in Hinblick auf Zugfestigkeit von mindestens 30,0% aufweist.

2. Biaxial ausgerichteter Artikel nach Anspruch 1, wobei der biaxial ausgerichtete Artikel ein Film ist.

3. Biaxial ausgerichteter Artikel nach Anspruch 2, wobei der Film ein Mehrschichtenfilm ist.

4. Biaxial ausgerichteter Artikel nach einem der vorstehenden Ansprüche, wobei die beiden Alphaolefin-Comonomere C4 - C10 Alphaolefine sind.

5. Biaxial ausgerichteter Artikel nach einem der vorstehenden Ansprüche, wobei das multimodale Terpolymer einen Fließindex MFR21 von 5,0 - 100 g/10 Min., gemäß ISO 1133 bestimmt, aufweist.

6. Biaxial ausgerichteter Artikel nach einem der vorstehenden Ansprüche, wobei das multimodale Terpolymer umfasst

   a. eine niedrigere Molekulargewichtsfraktion, die ein Polyehtylen-Homopolymer ist, und
   b. eine höhere Molekulargewichtsfraktion, die ein Ethylenterpolymer und mindestens zwei Alphaolefin-Comonomere sind, die 4 - 10 Kohlenstoffatome aufweisen.

7. Biaxial ausgerichteter Artikel nach einem der vorstehenden Ansprüche, wobei das multimodale Terpolymer einen Fließindex MR21 im Bereich von 15,0 - 50,0 g/ 10 Min. aufweist.

8. Biaxial ausgerichteter Artikel nach einem der vorstehenden Ansprüche, wobei das Volumenstromverhältnis FRR21/5 des multimodalen Terpolymers im Bereich von 10,0 bis 50,0 ist.

9. Biaxial ausgerichteter Mehrschichtenfilm, mindestens zwei Schichten umfassend, wobei mindestens eine Schicht 1,0 - 100,0 Gew.-% eines multimodalen Ethylenterpolymers und mindestens zwei Alphaolefin-Comonomere umfasst, wobei das multimodale Terpolymer eine Dichte im Bereich von 930-940 kg/m$^3$ und einen Fließindex MFR21 von 5,0 - 200 g/10 Min., gemäß ISO 1133 bestimmt, aufweist, und wobei der biaxial ausgerichtete Film eine relative Isotropie in Hinblick auf Zugfestigkeit von mindestens 30,0% aufweist.

10. Biaxial ausgerichteter Film nach Anspruch 9, wobei das multimodale Terpolymer einen Fließindex MFR21 von 5,0 - 100 g/10 Min., gemäß ISO 1133 bestimmt, aufweist.

**11.** Laminierte Filmstruktur, einen biaxial ausgerichteten Film nach Anspruch 2 bis 10 umfassend, der auf ein Substrat laminiert wird.

**12.** Laminierte Filmstruktur nach Anspruch 11, wobei die Struktur nur aus Polyethylenpolymeren besteht.

**13.** Verwendung eines multimodalen Ethylenterpolymers und mindestens zweier Alphaolefin-Comonomere, wobei das multimodale Terpolymer eine Dichte im Bereich von 930 - 940 kg/m$^3$ und einen Fließindex MFR21 von 5,0 - 200 g/10 Min., gemäß ISO 1133 bestimmt, aufweist, und wobei der biaxial ausgerichtete Artikel eine relative Isotropie in Hinblick auf Zugfestigkeit von mindestens 30,0% aufweist.

**14.** Verfahren zur Herstellung eines biaxial ausgerichteten Films, ein multimodales Ethylenterpolymer und mindestens zwei Alphaolefin-Comonomere nach Anspruch 1 umfassend, die folgenden Schritte umfassend

   a. Schmelzen und Homogenisieren des multimodalen Ethylenterpolymers und mindestens zweier Alphaolefin-Comonomere in einem Extruder;
   b. Formen der Schmelze in einen Gießfilm;
   c. Kühlen des Gießfilms;
   d. Erneut Erhitzen des Gießfilms, vorzugsweise auf eine Temperatur zwischen 80 - 110 °C;
   e. Strecken des Gießfilms in Maschinenrichtung in einem Verhältnis zwischen 1:3 und 1:10;
   f. Tempern des MDO-gestreckten Films, vorzugsweise bei Temperaturen zwischen 50 - 90 °C;
   g. Erneut Erhitzen des MDO-gestreckten Films, vorzugsweise bei Temperaturen zwischen 100 - 150 °C;
   h. Strecken des MDO-gestreckten Films in Querrichtung in einem Verhältnis zwischen 1:5 -1:10.

**15.** Verfahren nach Anspruch 14, wobei die Streckschritte eine Spannrahmentechnik anwenden.

## Revendications

**1.** Article orienté biaxialement comprenant de 1,0 à 100,0% en poids d'un terpolymère multimodal d'éthylène et d'au moins deux comonomères alpha-oléfiniques, dans lequel le terpolymère multimodal a une masse volumique dans la plage de 930 à 940 kg/m$^3$ et un MFR21 de 5,0 à 200 g/10 min déterminé selon ISO 1133, et dans lequel ledit article orienté biaxialement a une isotropie relative eu égard à la résistance à la traction d'au moins 30,0 %.

**2.** Article orienté biaxialement selon la revendication 1 dans lequel l'article orienté biaxialement est un film.

**3.** Article orienté biaxialement selon la revendication 2 dans lequel ledit film est un film multicouche.

**4.** Article orienté biaxialement selon l'une quelconque des revendications précédentes, dans lequel les deux comonomères alpha-oléfiniques sont des alpha-oléfines en C4 à 10.

**5.** Article orienté biaxialement selon l'une quelconque des revendications précédentes dans lequel ledit terpolymère multimodal a un MFR21 de 5,0 à 100 g/10 min déterminé selon ISO 1133.

**6.** Article orienté biaxialement selon l'une quelconque des revendications précédentes, dans lequel le terpolymère multimodal comprend

   a. une fraction de masse moléculaire plus faible étant un homopolymère de polyéthylène et
   b. une fraction de masse moléculaire plus élevée étant un terpolymère d'éthylène et d'au moins deux comonomères alpha-oléfiniques ayant de 4 à 10 atomes de carbone.

**7.** Article orienté biaxialement selon l'une quelconque des revendications précédentes, dans lequel le terpolymère multimodal a un MFR21 dans la plage de 15,0 à 50,0 g/10 min.

**8.** Article orienté biaxialement selon l'une quelconque des revendications précédentes dans lequel le FRR21/5 du terpolymère multimodal est dans la plage de 10,0 à 50,0.

**9.** Film multicouche orienté biaxialement comprenant au moins deux couches dans lequel au moins une couche comprend de 1,0 à 100% en poids d'un terpolymère multimodal d'éthylène et d'au moins deux comonomères alpha-oléfiniques dans lequel le terpolymère multimodal a un MFR21 de 5,0 à 200 g/10 min et une masse volumique dans la plage de 930 à 940 kg/m$^3$, et dans lequel ledit film orienté biaxialement a une isotropie relative eu égard à la résistance à la traction d'au moins 30,0 %.

10. Film orienté biaxialement selon la revendication 9 dans lequel ledit terpolymère multimodal a un MFR21 de 5,0 à 100 g/10 min déterminé selon ISO 1133.

11. Structure de film stratifié comprenant un film orienté biaxialement selon la revendication 2 à 10 stratifié à un substrat.

12. Structure de film stratifié selon la revendication 11 dans laquelle la structure est constituée de polymères de polyéthylène uniquement.

13. Utilisation d'un terpolymère multimodal d'éthylène et d'au moins deux comonomères alpha-oléfiniques dans laquelle le terpolymère multimodal a une masse volumique dans la plage de 930 à 940 kg/m$^3$ et un MFR21 de 5,0 à 200 g/10 min déterminé selon ISO 1133 dans la production de films monocouches ou multicouches orientés biaxialement, en particulier dans des solutions d'emballage monomatériau, dans laquelle ledit film orienté biaxialement a une isotropie relative eu égard à la résistance à la traction d'au moins 30,0 %.

14. Procédé de production d'un film orienté biaxialement comprenant un terpolymère multimodal d'éthylène et d'au moins deux comonomères alpha-oléfiniques selon la revendication 1, comprenant les étapes consistant à

a. faire fondre et homogénéiser le terpolymère multimodal d'éthylène et d'au moins deux comonomères alpha-oléfiniques dans une extrudeuse ;
b. former la masse fondue en un film coulé ;
c. refroidir ledit film coulé ;
d. chauffer à nouveau ledit film coulé, de préférence à des températures entre 80 et 110 °C ;
e. étirer ledit film coulé dans la direction machine dans un rapport entre 1:3 et 1:10 ;
f. recuire ledit film étiré dans la direction machine, de préférence à des températures entre 50 et 90 °C ;
g. chauffer à nouveau ledit film étiré dans la direction machine, de préférence à des températures entre 100 et 150 °C ; et
h. étirer ledit film étiré dans la direction machine dans la direction transversale dans un rapport entre 1:5 et 1:10.

15. Procédé selon la revendication 14 dans lequel les étapes d'étirage font appel à une technologie de rame élargisseuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9722470 A1
- US 6306969 B
- WO 20130239223 A
- WO 2016135213 A
- EP 2585291 A
- EP 0692515 A
- EP 2415598 A
- EP 2944466 A
- WO 9744371 A
- WO 9618662 A

**Non-patent literature cited in the description**

- **PARKINSON, M. ; KLIMKE, K. ; SPIESS, H.W. ; WILHELM, M.** *Macromol. Chem. Phys.,* 2007, vol. 5 (208), 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **J. RANDALL.** *Macromol. Sci., Rev. Macromol. Chem. Phys.,* 1989, vol. C29, 201